# EUROPÄISCHE PATENTSCHRIFT

(11) **EP 1 747 976 B1**
(45) Veröffentlichungstag und Bekanntmachung des Hinweises auf die Patenterteilung: **25.03.2009**
(21) Anmeldenummer: 06115442.3
(22) Anmeldetag: 14.06.2006
(51) Int. Cl.: B62D 27/06, B62D 27/02

(54) **Verbindung von zumindest zwei Bauteilen einer Fahrzeugkarosserie**
Joint between two vehicle body components
Raccordement entre deux composants d'un corps de véhicule

(30) Priorität: 25.07.2005 DE 102005034661
(43) Veröffentlichungstag der Anmeldung: 31.01.2007
(73) Patentinhaber: SIEMENS AKTIENGESELLSCHAFT, 80333 München (DE)
(72) Erfinder: Kirchhoff, Sascha, 47803 Krefeld (DE); Weiler, Joachim, 53498 Gönnersdorf (DE)

(56) Entgegenhaltungen:
- EP-A- 1 138 567
- DE-A1- 4 336 105
- DE-C1- 10 010 709
- FR-A1- 2 729 990
- US-A- 6 092 953

## Beschreibung

Die Erfindung betrifft eine Verbindung von zumindest zwei Bauteilen, insbesondere eines Fahrzeugs, durch eine Anzahl von Schrauben oder Niete, wobei eines der beiden Bauteile dem Durchtritt des jeweiligen Schafts der Schraube oder des Niets dienende Langlöcher aufweist, wobei in das Langloch des Bauteils ein Ausgleichselement eingreift, das innerhalb dieses Langlochs verschiebbar ist und selbst ein Langloch enthält, dessen Längsachse rechtwinklig zur Längsachse des Bauteil-Langlochs verläuft.

Eine solche Verbindung ist beispielsweise aus der DE 43 36 105 A1 bekannt. Ebenfalls zum Stand der Technik gehört die EP 1 138 567 A1, aus der ebenfalls eine Merkmalskombination nach dem Oberbegriff des Anspruchs 1 hervorgeht.

Es ist allgemein üblich, zwei Bauteile, die durch eine Anzahl von Schrauben oder Niete verbunden werden sollen, in der Vorfertigung unabhängig voneinander mit den erforderlichen Bohrungen zu versehen. Dabei sind wegen stets zugelassener Maßtoleranzen gewisse Ungenauigkeiten hinsichtlich der Anordnung der Lochbilder in der Regel nicht zu vermeiden, so dass bei nicht genau fluchtenden Bohrungen das Montieren der Schrauben oder Niete erschwert oder erst bei zusätzlicher mechanischer Nachbearbeitung der Bohrungen möglich ist. Um diesen Schwierigkeiten bei der Montierbarkeit zu begegnen, sind die Bohrungen eines der beiden Bauteile als Langlöcher ausgeführt. Diese Langlöcher schaffen allerdings nur einen Toleranzausgleich in einer Richtung, und zwar in Längsachse der Langlöcher.

Der Erfindung liegt die Aufgabe zugrunde, eine Verbindung der gattungsgemäßen Art auf möglichst einfache Weise so zu gestalten, das ein für das leichte Montieren der Schrauben oder Niete wesentlicher Toleranzausgleich auch quer zur Längsachse der Langlöcher erreichbar ist.

Diese Aufgabe wird erfindungsgemäß dadurch gelöst, dass das Bauteil winkelförmig ausgebildet ist und in jedem seiner beiden Schenkel Langlöcher für ein jeweiliges Ausgleichselement aufweist, wobei das Bauteil als Zwischen-Halteelement für eine an seinem horizontalen Schenkel anzubringende Deckenplatte und für eine an seinem vertikalen Schenkel anzubringende Seitenwand vorgesehen ist.

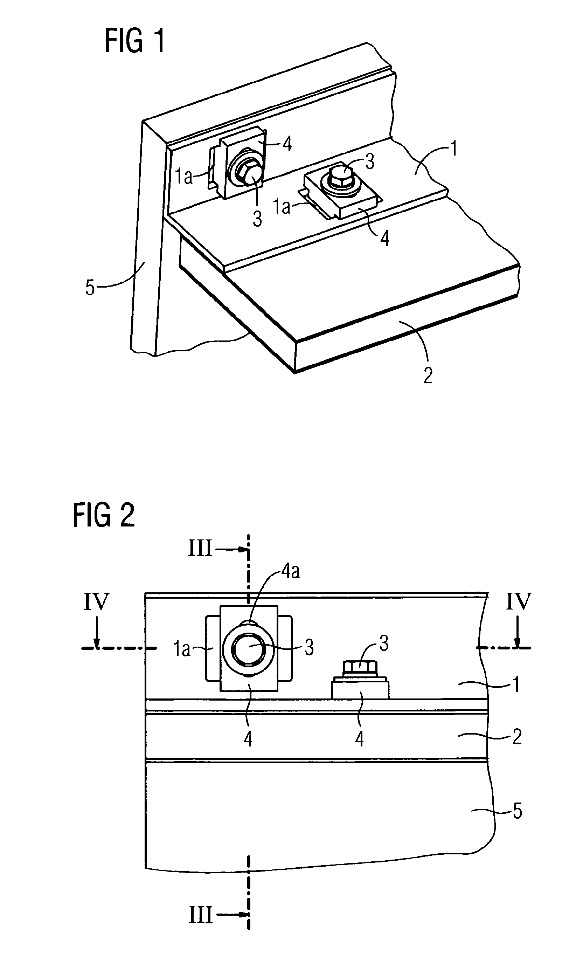

Ein Ausführungsbeispiel der Erfindung ist in der Zeichnung als Ausschnitt dargestellt und wird im Weiteren näher beschrieben. Es zeigen
- Fig. 1: eine Bauteilverbindung in einer Perspektive,
- Fig. 2: die Vorderansicht zu Fig. 1,

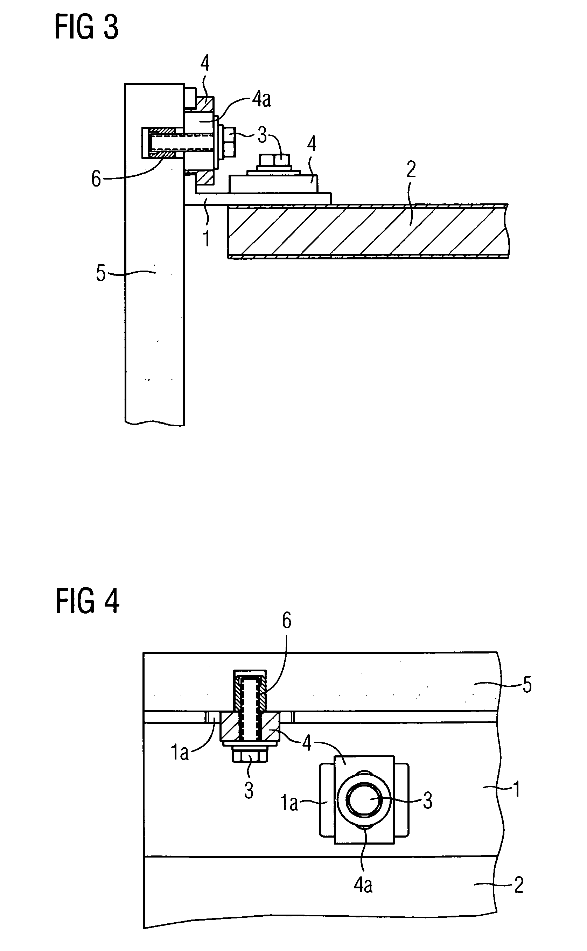

- Fig. 3: den Schnitt nach der Linie III - III in Fig. 2,
- Fig. 4: den Schnitt nach der Linie IV - IV in Fig. 2.

Im Ausführungsbeispiel wird davon ausgegangen, dass ein Bauteil 2 - eine Deckenplatte - über ein winkelförmiges Bauteil 1 als Zwischen-Halteelement letztlich mit einer Seitenwand als Bauteil 5 mittels einer Anzahl von Schrauben 3 (oder wahlweise auch Niete) verbunden werden soll. Die Deckenplatte 2 und die Seitenwand 5 sind also rechtwinklig zueinander angeordnet.

Das Bauteil 1 enthält in jedem seiner beiden Schenkel Langlöcher 1a, in die jeweils ein Ausgleichselement 4 eingreift, das innerhalb des Langlochs 1a verschiebbar ist. Jedes dieser Ausgleichselemente 4 beinhaltet ebenfalls ein Langloch 4a, dessen Längsachse rechtwinklig zur Längsachse des Langlochs 1a verläuft. Die Schrauben 3, welche die Langlöcher 1a und 4a durchdringen, sind im Beispielsfall in Einschraubmuttern 6 der Deckenplatte 1 und der Seitenwand 5 gehaltert. Wie ersichtlich, ermöglichen die Langlöcher 1a und 4a in Kombination mit den Ausgleichselementen 4 Verschiebungen zum Ausgleich von Toleranzen in zwei Richtungen, d.h., bezogen auf das Bauteil 1 und die Deckenplatte 2 in Längs- und Querrichtung und bezogen auf das Bauteil 1 und die Seitenwand 5 in Längsrichtung und in der Hochachse.

Entsprechend der zuvor beschriebenen Weise ist es durchaus möglich, die Erfindung in einer Situation zu realisieren, bei der etwa nur die Bauteile 1 und 2 oder die Bauteile 1 und 5 miteinander verbunden werden sollen. Dann genügt eine einzige Reihe der Ausgleichselemente 4.

## Patentansprüche

1. Verbindung von zumindest zwei Bauteilen (1, 2), insbesondere eines Fahrzeugs, durch eine Anzahl von Schrauben (3) oder Niete, wobei eines der beiden Bauteile (1) dem Durchtritt des jeweiligen Schafts der Schraube (3) oder des Niets dienende Langlöcher (1a) aufweist,
wobei in das Langloch (1a) des Bauteils (1) ein Ausgleichselement (4) eingreift, das innerhalb dieses Langlochs (1a) verschiebbar ist und selbst ein Langloch (4a) enthält, dessen Längsachse rechtwinklig zur Längsachse des Bauteil-Langlochs (1a) verläuft,
**dadurch gekennzeichnet, dass**
das Bauteil (1) winkelförmig ausgebildet ist und in jedem seiner beiden Schenkel Langlöcher (1a) für ein jeweiliges Ausgleichselement (4) aufweist,
wobei das Bauteil (1) als Zwischen-Halteelement für eine an seinem horizontalen Schenkel anzubringende Deckenplatte (2) und für eine an seinem vertikalen Schenkel anzubringende Seitenwand (5) vorgesehen ist.

## Claims

1. Connection of at least two components (1, 2), in particular of a vehicle, by means of a number of screws (3) or rivets, one of the two components (1) having long holes (1a) serving for the passage of the respective shank of the screw (3) or of the rivet, the long hole (1a) of the component (1) having engaging into it a compensating element (4) which is displaceable within this long hole (1a) and itself contains a long hole (4a), the longitudinal axis of which runs at right angles to the longitudinal axis of the component long hole (1a), **characterized in that** the component (1) is of angular design and in each of its two legs has long holes (1a) for a respective compensating element (4), the component (1) being intended as an intermediate holding element for a ceiling panel (2) to be attached to its horizontal leg and for a side wall (5) to be attached to its vertical leg.

## Revendications

1. Liaison d'au moins deux éléments (1,2), notamment d'un véhicule automobile, par un certain nombre de vis (3) ou de rivets, l'un des deux éléments (1) ayant des boutonnières (1a) servant au passage du fût respectif de la vis (3) ou du rivet,
dans lequel dans la boutonnière (1a) de l'élément (1) pénètre un élément (4) de compensation, qui peut coulisser à l'intérieur de cette boutonnière (1a) et qui comporte soi-même une boutonnière (4a) dont l'axe longitudinal est à angle droit avec l'axe longitudinal de la boutonnière (1a) de l'élément,
**caractérisé en ce que**
l'élément (1) est constitué sous la forme d'une cornière et a, dans chacune de ses deux ailes, des boutonnières (1a) pour un élément (4) de compensation respectif,
l'élément (1) étant prévu comme élément de maintien intermédiaire pour une plaque (2) de recouvrement se mettant sur son aile horizontale et pour une paroi (5) latérale se mettant sur son aile verticale.
